Europäisches Patentamt

European Patent Office

Office européen des brevets

(11) Publication number: **0 043 920**
**B1**

(12) EUROPEAN PATENT SPECIFICATION

(45) Date of publication of patent specification: **24.10.84**

(51) Int. Cl.³: **B 23 B 29/034, B 23 Q 15/22**

(21) Application number: **81104556.6**

(22) Date of filing: **12.06.81**

(54) Machine tool with bore diameter measuring apparatus and tool position compensating apparatus.

(30) Priority: **10.07.80 JPU 97825/80**
**24.09.80 JP 132728/80**

(43) Date of publication of application:
**20.01.82 Bulletin 82/03**

(45) Publication of the grant of the patent:
**24.10.84 Bulletin 84/43**

(84) Designated Contracting States:
**DE FR GB NL**

(56) References cited:
**DD-A- 27 044**
**DD-A- 96 884**
**DE-A-1 920 939**
**US-A-2 093 743**
**US-A-3 623 216**
**US-A-3 644 049**
**US-A-3 740 160**
**US-A-4 009 968**

**Patents Abstracts of Japan, Vol. 4, No. 92, 3
July 1980, page 70M18**

(73) Proprietor: **TOYODA KOKI KABUSHIKI KAISHA**
**1-1, Asahi-machi**
**Kariya-shi Aichi-ken (JP)**

(72) Inventor: **Yamakage, Tetsuro**
**1-7-13, Misono-cho**
**Anjo-shi Aichi-ken (JP)**
Inventor: **Yoneda, Takao**
**5-1-1, Futamuradai**
**Toyoake-shi Aichi-ken (JP)**
Inventor: **Imamura, Kohsei**
**2-2, Showa-cho**
**Kariya-shi Aichi-ken (JP)**

(74) Representative: **Wächtershäuser, Günter, Dr.**
**Tal 29**
**D-8000 München 2 (DE)**

## Description

Background of the invention
Field of the invention

The present invention relates to a machine tool with a bore diameter measuring apparatus and a tool position compensating apparatus as specified in the preamble of the main claim and as known from US—A—3 740 160.

Description of the prior art

In a conventional machine tool, in order to measure a machined bore of a workpiece mounted on the machine tool, a measuring device, provided with a displaceable feeler and a displacement detector, such as a differential transformer, for detecting a displacement amount of the feeler, is inserted into a tool spindle of the machine tool to be moved into engagement with the machined bore. In order to output the measured signal, the measuring device is also provided with conductors which are connected through a connector to an external control circuit. Accordingly, such measuring device cannot be formed integrally with a boring tool which is rotated for boring operations. In consequence, in order to measure the machined bore, the measuring device has to be inserted into the tool spindle through the aid of an automatic tool change device, and after measurement of the machined bore, the measuring device is exchanged for the boring tool by means of the automatic tool change device. The radial position of the boring tool is then adjusted based upon the measured value for a finish boring operation. In particular, in case where a workpiece is first bored at trial and then finished by the boring tool being adjusted based upon the measured result of the workpiece bore machined at trial, the automatic tool change operation has to be performed twice, which is time-consuming. Furthermore, mis-alignment between the boring tool at the trial boring and that at the finish boring would be caused as a result of the automatic tool change operation, which affects the accuracy of the finished bore.

In addition, in the conventional tool position compensating apparatus, it is difficult to adjust the position of the cutting tool within an accuracy of micron order.

Further machine tools having certain features relevant to the present invention are known from DD—A—27044, DP—A—55—48557 and DE—A—1 920 939.

It is, therefore, an object of the present invention to provide an improved machine tool capable of measuring a workpiece bore and adjusting a radial position of a boring tool based upon the measured result with the boring tool being inserted into a tool spindle without intervention of an automatic tool change operation.

Another object of the present invention is to provide an improved machine tool of the character set forth above, wherein a tool holder with the boring tool is provided with a co-axial contact detecting head for measuring the workpiece bore and an adjusting apparatus for adjusting the radial position of the boring tool by utilizing rotation of the tool spindle.

Another object of the present invention is to provide an improved machine tool with a tool position adjusting apparatus capable of making fine adjustment of a tool position.

These objects are achieved by a machine tool according to the main claim.

A preferred embodiment has the following features: A work table is mounted on a machine body for mounting thereon a workpiece formed with a bore to be machined. A spindle head is mounted on the machine body and rotatably supports a tool spindle. A motor is drivingly connected to the tool spindle for rotating the tool spindle. A servometer is provided for effecting relative movement between the work table and the tool spindle. Feed control means is connected to the servomotor for controlling the servomotor in accordance with feed pulses and axis designation signals. A boring tool is supported on a tool holder receivable in the tool spindle. Means is provided in the tool holder for adjusting a radial position of the boring tool by utilizing rotation of the tool spindle. A contact detecting head with a predetermined diameter is secured to the tool holder in co-axial relationship therewith. Means is electrically connected to the contact detecting head for detecting contact between the workpiece and the contact detecting head. Bore diameter measuring means is connected between the contact detecting means and the feed control means for applying feed pulses and axis designation signals to the feed control means so as to move the tool spindle relative to the workpiece from one position to another position at each of which the contact detecting head contacts the workpiece, along a path passing through the center of the workpiece bore, to thereby measure the diameter of the workpiece bore. A motor control circuit is connected to the motor for controlling the motor. The motor control circuit is responsive to the measuring means for rotating the tool spindle to adjust the radial position of the boring tool.

In a preferred embodiment, a ring-shaped internal gear and a reduction gear mechanism including a planet gear are utilised to transmit rotation of a tool spindle to a rotary member being threadedly engaged with an axially movable screw shaft.

Brief description of the drawings

The foregoing and other objects and many of the attendant advantages of the present invention will be readily appreciated as the same becomes better understood by reference to the following detailed description, when considered in connection with the accompanying drawings, in which:

Figure 1 is a sectional view of a tool holder incorporating a tool position compensating apparatus used in a machine tool according to an embodiment of the present invention;

Figure 2 is a sectional view taken along the line II—II in Figure 1;

Figure 3 is a schematic illustration of the machine tool with a bore diameter measuring apparatus for measuring a machined bore; and

Figure 4 is illustrative of a manner to measure a diameter of the machined bore.

Detailed description of the preferred embodiment

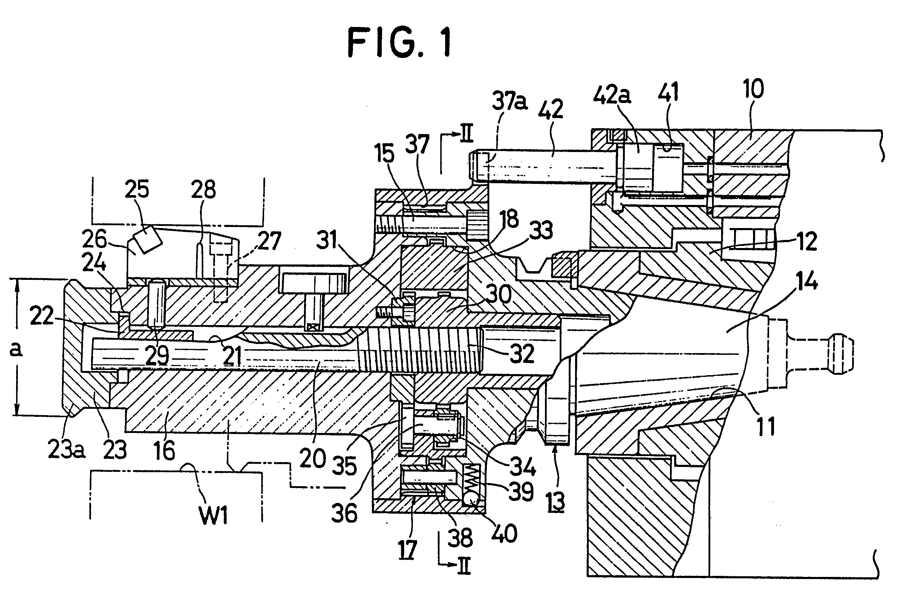

Referring now to the drawings, wherein like reference numerals or characters refer to identical or corresponding parts throughout the several views, and more particularly to Figure 1, there is shown a spindle head 10 of a numerically controlled machine tool with an automatic tool change function. A tool spindle 12, having a tapered bore 11 at its front end, is rotatably supported in the spindle head 10. The tool spindle 12 is rotated by a drive motor and is stopped at a predetermined angular position at a tool change operation. Furthermore, every rotation of the tool spindle 12 is detected by an approximate switch, not shown, at a tool position compensating operation. It is to be noted here that the machine tool has a function of measuring a machined bore by utilizing a contact detecting device, which is described later.

Reference numeral 13 denotes a tool holder to be used in the machine tool and incorporating a tool position compensating mechanism. The tool holder 13 comprises a shank 14 to be inserted into the tapered bore 11 of the tool spindle 12 and a cylindrical tool mounting shell 16 secured to the shank 14 in co-axial alignment therewith through bolts 15. At a contact portion between the shank 14 and the shell 16, there is formed a recess 18 to receive a reduction gear mechanism 17, which is described later.

A screw shaft 20 is non-rotatably but axially slidably received within the shell 16 in co-axial relationship therewith. The screw shaft 20 is formed at the front end thereof with a cam surface 21 which is sloped to ascend as it goes toward the front end of the screw shaft 20. A slide piece 22 is slidably engaged on the cam surface 21. The slide piece 22 is received in a groove 24, formed between the shell 16 and a contact detecting head 23 secured to the front end of the shell 16 in co-axial alignment therewith for measurement of a machined bore, in such a manner as to be movable only in a radial direction. The shell 16 is formed at its external front portion with a tool mounting seat, on which one end of a cutting tool 26 having a cutting blade 25 at its other end is fixed by means of a bolt 27. The cutting tool 26 is formed at its mid portion with a slot 28 to facilitate the outward flexing or bending of the cutting blade 25. A pin 29 extends through the mounting shell 16 in a radial direction thereof, and engages at its one end with the slide piece 22 and at its other end with the back of the cutting blade 25 of the cutting tool 26. Accordingly, when the screw shaft 20 is moved in the axial direction, the side piece 22 is moved in the radial direction through a wedge action of the cam surface 21, whereby the cutting tool 26 is flexed or bent in the radial direction through the pin 29 to adjust the position of the cutting blade 25.

Within the recess 18 formed at the contact portion between the shank 14 and the shell 16, a rotary gear 30 rotatably supported by the shank 14 and a stationary gear 31 secured to the shell 16 are received in juxtaposed relationship with each other and in coaxial alignment with the axis of the shank 14. The rotary gear 30 is threadedly engaged with a thread portion 32 formed at the rear end of the screw shaft 20. Within the recess 18, there is also received a ring-shaped transmission gear 33 which is rotatable about the axis of the tool holder 13 and encloses the rotary gear 30 and the stationary gear 31. The transmission gear 33 rotatably supports a shaft 36 on which are secured a pair of pinion gears 34 and 35 engaged with the rotary gear 30 and the stationary gear 31, respectively. It is noted here that the numbers of teeth of the stationary gear 31 and the pinion 35 are respectively set to be (N5−1) and (N6+1), where N5 and N6 are tooth numbers of the rotary gear 30 and the pinion 34, respectively. Accordingly, a reduction gear ratio of the rotary gear 30 to the transmission gear 33 is made larger.

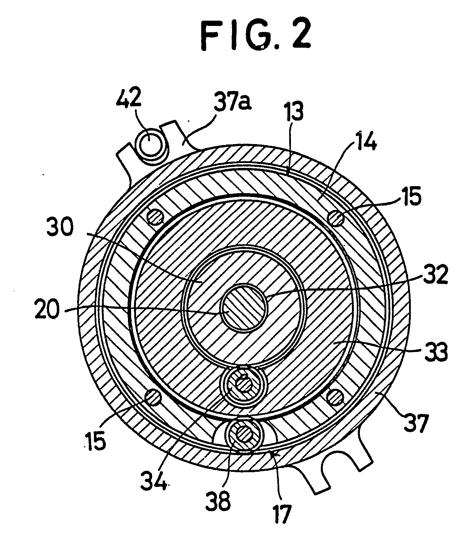

A ring-shaped internal gear 37 is rotatably supported on the external peripheries of the shank 14 and the shell 16. Rotatably supported by the shank 14 is a planet gear 38 which is engaged with both of the internal gear 37 and the transmission gear 33. The internal gear 37 is formed with a V-shaped groove into which a steel ball 40 is engaged by means of a compression spring 39 disposed between the shank 14 and the ball 40. Accordingly, the internal gear 37 is normally prevented from rotation relative to the shank 14 and the shell 16 during cutting operations. As shown in Figure 2, the internal gear 37 is formed on its external periphery with a pair of forked members 37a with one of which is engageable a piston rod 42 of a piston 42a slidably received in a cylinder 41 formed in the spindle head 10. When the piston rod 42 is engaged with the forked member 37a at the tool position compensating operation, the internal gear 37 is fixed relative to the spindle head 10 and the relative rotation is allowed between the internal gear 37 and the shank 14.

The contact detecting head 23 is made of an electrically conductive material and formed with a flange portion 23a, whose external surface is cylindrical with a narrow width and has a predetermined diameter a. The external surface of the flange portion 23a is not limited to be cylindrical, but may be formed in spherical shape.

The operation of tool position compensation in the above-described tool holder 13 is hereunder described. The shank 14 of the tool holder 13 is inserted by the automatic tool change device into the tapered bore 11 of the tool spindle 12 being stopped at a predetermined angular position. The cylinder 41 is actuated to advance the piston rod 42 into engagement with the forked member 37a of the internal gear 37 to thereby fix the internal gear 37 relative to the spindle head 10. Under these conditions, the spindle 12 together with the tool holder 13 is rotated by the drive motor at a low speed. When the tool holder 13 is rotated relative to the internal gear 37, the transmission gear 33 is rotated relative to the tool holder 13 through the planet gear 38 in the same direction as the tool holder 13. Rotation of the transmission gear 33 causes the pinion gear 35 to rotate about the stationary gear 31, whereby the rotary gear 30 is rotated relative to the tool holder 13 through the pinion 34.

Assuming that the tooth numbers of the internal gear 37, transmission gear 33, stationary gear 31, pinion gear 35, rotary gear 30 and pinion gear 34 are N1, N2, N3, N4, N5 and N6, respectively, rotational amount $\theta$ of the rotary gear 30 per one rotation of the spindle 12 is represented as follows:

$$\theta = N1/N2 \ (N3 \cdot N6/N4 \cdot N5 - 1)$$

Accordingly, rotation of the spindle 12 is transmitted to the rotary gear 30 with a large reduction gear ratio.

Rotation of the rotary gear 30 relative to the tool holder 13 causes the screw shaft 20 to move in the rightward direction, as viewed in Figure 1, whereby the slide piece 22 is moved radially outwardly through the wedge action of the cam surface 21. Radial movement of the slide piece 22 is transmitted through the pin 29 to the cutting tool 26 to thereby adjust the position of the cutting blade 25 in the radial direction.

In this manner, the radial position of the cutting blade 25 of the cutting tool 26 is adjusted through a unit amount per one rotation of the spindle 12.

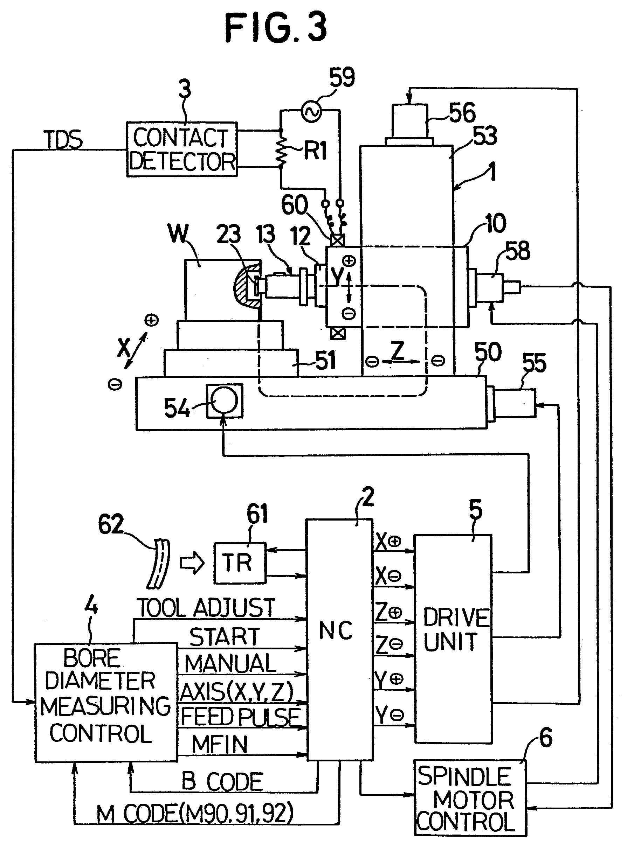

A construction of the machine tool with a bore diameter measuring function is described hereunder with reference to Figure 3. The machine tool comprises a machine body 1, a numerical control device 2, a contact detecting circuit 3 and a control device 4 for measurement of a machined bore.

Reference numeral 50 indicates a bed of the machine body, on which a work table 51 for mounting a workpiece W is mounted for sliding movement in a horizontal X-axis direction perpendicular to the plane of the Figure. A column 53 is mounted on the bed 50 for sliding movement in a horizontal Z-axis direction orthogonal to the X-axis direction. The spindle head 10 is, in turn, mounted on the column 53 for sliding movement in a vertical Y-axis direction. The work table 51 is drivingly connected to a servomotor 54 secured to the bed 50 to be moved in the X-axis direction. The column 53 is drivingly connected to a servomotor 55 secured to the bed 50 to be moved in the Z-axis direction. The spindle head 10 is drivingly connected to a servomotor 56 mounted on the top of the column 53 to be moved in the Y-axis direction. The servomotors 54, 55 and 56 are connected to the numerical control device 2 through a drive unit 5 to be rotated by distribution feed pulses generated from the numerical control device 2.

The tool spindle 12 is drivingly connected to a drive motor 58 secured to the spindle head 10 to be rotated thereby and adapted to receive the above-described tool holder 13 by means of the automatic tool change device, not shown. The drive motor 58 is controlled by a spindle motor control circuit 6 connected to the numerical control device 2. A toroidal coil 60 is mounted on the front end of the spindle head 10 and is connected to an AC power source 59 through a detection resistance R1. The coil 60 is wound around an iron core which surrounds the spindle 12. When the flange portion 23a of the contact detecting head 23 is brought into contact with the machined bore W1 of the workpiece W, an induced current is produced in a looped circuit including the workpiece W, work table 51, bed 50, column 53, spindle head 10, tool spindle 12, and tool holder 13, as shown in dotted lines in Figure 3, whereby an exciting current in the coil 60 is increased. This causes voltage across the resistance R1 to be increased. The contact detecting circuit 3 detects the contact between the workpiece W and the contact detecting head 23 by detecting increased voltage across the resistance R1. When detecting the contact, the contact detecting circuit 3 generates a contact detecting signal TDS.

The numerical control device 2 is of a conventional construction and has a usual numerical control function in accordance with numerical control information, which is recorded on a punched tape 62 readable by a tape reader 61. Furthermore, the numerical control device 2 serves to control movement of the spindle head 10 in accordance with command signals output from a bore diameter measurement control device 4, which is described later. The numerical control information includes M-code data M90 to M92 for commanding a bore diameter measuring operation and B-code data for instructing a finished diameter of the bore W1 of the workpiece W. These code data are applied from the numerical control device 2 to the bore diameter measurement control device 4 in the course of the numerical control operation.

The bore diameter measurement control device 4 in this embodiment is constructed by a commercially available general purpose microcomputer which is programmed to control the bore diameter measuring operation by switching the numerical control device 2 into a manual mode and applying an axis designation data and a pulse distribution command to the numerical control device 2 in response to the M-code data M90 to M92.

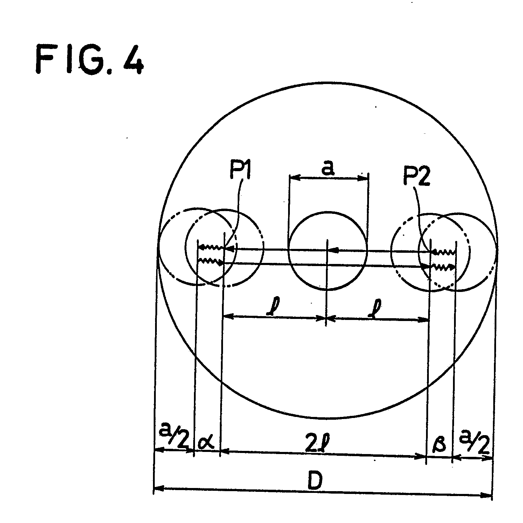

The manner of measuring a diameter of the machined bore W1 on the workpiece W is illustrated in Figure 4. It is to be noted here that the machine tool according to the present invention has also a centering function to align the tool spindle 12 with the center of a bore of the workpiece by utilizing the contact detecting head 23 located at an axial position shown in plantom lines in Figure 1 before a boring operation is performed on the bore. Accordingly, when the boring operation is completed and the contact detecting head 23 is moved axially for a bore diameter measuring operation, the axis of the contact detecting head 23 is located at the center of the machined bore.

In order to measure the machined bore, the contact detecting head 23 with the known diameter a is moved at a rapid speed, for example, to the left as viewed in Figure 4 by a distance l from the center of the machined bore to a point P1 in the vicinity of the internal surface of the machined bore. The contact detecting head 23 is then moved at a low speed still to the left until the contact detecting circuit 3 detects the contact between the contact detecting head 23 and the machined bore. A distance $\alpha$ between the point P1 and a point where the contact detecting head 23 contacts the machined bore is calculated by counting the number of feed pulses applied to the associated servomotor. Subsequently, the contact detecting head 23 is moved to the right back to the point P1 at the low speed and moved at the rapid speed by the distance 2l to a point P2 in the vicinity of the opposite internal surface of the machined bore. The detecting head 23 is then moved at the low speed still to the right until the contact detecting circuit 3 detects the contact between the contact detecting head 23 and the opposite internal surface of the machined bore. A distance $\beta$ between the point P2 and a point where the contact detecting head 23 contacts the opposite internal surface of the machined bore is calculated. With the distance $\alpha$ and $\beta$ being calculated, the diameter D of the machined bore is obtained from the following equation:

$$D=\alpha+\beta+2l+a$$

A tool position compensation amount $\varepsilon$ can be calculated by obtaining a half of difference between the measured diameter D and a finish diameter Do preset in the B-code data.

Feed instructions to control the above-described feed movement are applied from the bore diameter measurement control device 4 to the numerical control device 2 to control the associated servomotor. The workpiece is first machined at trial by the tool which is set to machine a bore with a diameter a little smaller than a finish bore diameter, and subsequently a diameter of the machined bore is measured so as to obtain a tool position compensation amount $\varepsilon$. A number $\eta$ of spindle rotations for tool position compensation is obtained by the division of the tool position compensation amount $\varepsilon$ by a unit tool position compensation amount $\Delta\chi$ per one spindle rotation. With the cylinder 41 being actuated to fix the internal gear 37 relative to the spindle head 10, the spindle 12 is rotated through n revolutions in one direction, whereby the tool position is adjusted to a position corresponding to the diameter Do of the finish bore. When the piston of the cylinder 41 is retracted to release the internal gear 37, a finish machining operation can be immediately initiated. Rotation of the spindle 12 in the reverse direction enables the tool position compensation in the opposite direction.

Obviously, numerous modifications and variations of the present invention are possible in light of the above teachings. It is to be understood, therefore, that within the scope of the appended claims, the invention may be practiced otherwise than as specifically described herein.

**Claims**

1. A machine tool comprising a machine body (1), a work table (51) mounted on said machine body for mounting thereon a workpiece (W) formed with a bore to be machined, a spindle head (10) mounted on said machine body, a tool spindle (12) rotatably supported in said spindle head (10), a motor (58) drivingly connected to said tool spindle (12) for rotating said tool spindle (12), a servomotor (54, 55, 56) for effecting relative movement between said work table and said tool spindle (12), a motor control circuit (6) connected to said motor (58) for controlling said motor, feed control means (5) connected to said servomotor for controlling said servomotor in accordance with feed pulses and axis designation signals, a tool holder (13) receivable in said tool spindle (12), a boring tool (26) supported on said tool holder (13), means (20, 29) provided in said tool holder for adjusting a radial position of said boring tool (26) by utilizing rotation of said tool spindle characterized by a contact detecting head (23) with a predetermined diameter secured to said tool holder (13) in co-axial relationship therewith, means (3) electrically connected to said contact detecting head (23) for detecting contact between said workpiece (W) and said contact detecting head (23), and bore diameter measuring means (4) connected between said contact detecting means (3) and said feed control means (5) for applying feed pulses and axis designation signals to said feed control means (5) so as to move said tool spindle (12) relative to said workpiece (W) from one position to another position at each of which said contact detecting head (23) contacts said workpiece (W), along a path passing through the center of said workpiece bore, to thereby measure the diameter of said workpiece bore, said motor control circuit (6) being responsive to said measuring means (4) for rotating said tool spindle (12) to adjust the radial position of said boring tool.

2. A machine tool as set forth in Claim 1, wherein said measuring means (4) has a function of calculating a difference between a measured diameter of said workpiece bore and a commanded finish diameter, and said motor control circuit (6) rotates said tool spindle (12) through revolutions corresponding to said difference.

3. A machine tool as set forth in Claim 1,, wherein said contact detecting means comprises:

a resistance (R1);
a coil (60) connected to an electric power supply (59) in series with said resistance (R1) and disposed around a front portion of said spindle head (10) for causing induced current to flow through said workpiece (W), contact detecting head (23), tool spindle (12), spindle head (10), machine body and work table when contact is made between said workpiece (W) and said contact detecting head (23); and
a voltage detector (3) connected to said resistance (R1) and said measuring means (4) for detecting the change of voltage across said resistance when contact is made between said workpiece (W) and said contact detecting head (60).

4. A machine tool as set forth in Claim 1, 2 or 3, wherein said measuring means (4) applies feed pulses and axis designation signals to said feed control means (5) so as to move said tool spindle (12) at a rapid speed through a predetermined distance from the center of said workpiece bore toward said one position and at a slow speed until said tool spindle (12) is moved to said one position and then to move said tool spindle (12) at the rapid speed through twice said predetermined distance from said one position toward said another position and at the slow speed until said tool spindle is moved to said another position.

5. A machine tool as set forth in Claim 1, 2 or 3, wherein said tool holder (13) comprises:

a shank (14) receivable in said tool spindle (12); and
a tool mounting shell (16) securedly connected to said shank (14) and carrying said boring tool (26) adjustably movable in a radial direction of said mounting shell (16), and wherein said adjusting means comprises:

a screw shaft (20) axially slidably but non-rotatably supported in said tool mounting shell (16) and formed with a cam surface (21) which is sloped along the axis of said tool mounting shell (16);
transmitting means (22, 29) interposed between said boring tool (26) and said cam surface (21) of said screw shaft (20) for adjustably moving said boring tool (26) in the radial direction by the wedge action of said cam surface (21) upon axial movement of said screw shaft (20);
a rotary member (30) rotatably received and threadedly engaged with said screw shaft (20);
a ring shaped internal gear member (37) rotatably supported on the external peripheries of said shank (14) and said mounting shell (16) and adapted to be fixed relative to said spindle head (12) for bringing about relative rotation between said internal gear member (37) and said mounting shell (16) when said tool spindle (12) is rotated; and
reduction gear means (17) for transmitting rotation of said mounting shell (16) relative to said internal gear member (37) to said rotary member (30) at a predetermined reduction gear ratio, said reduction gear means (17) including a rotatable planet gear (38) engaged with said internal gear member (37).

6. A machine tool as set forth in Claim 5, wherein said transmitting means comprises:

a slide piece (22) maintained in contact with said cam surface (21) of said screw shaft (20) and guided to be moved in the radial direction of said mounting shell (16) when said screw shaft (20) is axially moved; and
a pin (29) guided by said tool mounting shell (16) between said slide piece (22) and said boring tool (26) for transmitting radial movement of said slide piece (22) to said boring tool.

7. A machine tool as set forth in Claim 5, further comprising:

latch means (39, 40) provided between said internal gear member (37) and one of said shank (14) and mounting shell (16) for preventing rotation of said internal gear member (37) relative to said shank (14) during cutting operations.

8. A machine tool as set forth in Claim 5, wherein said rotary member (30) and said reduction gear means (17) are received in a recess formed at the contact portion between said shank (14) and said mounting shell (16).

9. A machine tool as set forth in Claim 9, wherein said reduction gear means (17) comprises:

a stationary gear (31) secured to said mounting shell (16) in juxtaposed and co-axial relationship with said rotary member (30);

a ring-shaped transmission gear (33) enclosing said rotary member (30) and said stationary gear (31) and engaged at the external periphery thereof with said planet gear (38); and

a pair of pinion gears (35, 36) rotatably supported by said transmission gear (33) and engaged with said stationary gear (31) and a gear portion formed on said rotary member (30).

**Revendications**

1. Machine-outil comprenant un corps de machine (1), une table de travail (51) montée sur ledit corps de machine pour recevoir une pièce à usiner (W) présentant un perçage destiné à être usiné, une téte de broche (10) montée sur ledit corps de machine, une broche porte-outil (12) supportée à rotation par ladite tête de broche (10), un moteur (58) relié par une transmission à ladite broche porte-outil (12) pour entraîner en rotation ladite broche porte-outil (12), un servo-moteur (54, 55, 56) pour engendrer un déplacement relatif entre ladite table de travail et ladite broche porte-outil (12), un circuit de commande de moteur (6) relié audit moteur (58) pour commander ledit moteur, un moyen de commande de l'avance (5) relié audit servo-moteur pour commander ledit servo-moteur en fonction d'impulsions d'avance et de signaux de définition des axes, un porte-outil (13) pouvant être inséré dans ladite broche porte-outil (12), un alésoir (26) porté par ledit porte-outil (13), un moyen (20, 29) prévu dans ledit porte-outil pour régler le positionnement radial dudit alésoir (26), en utilisant la rotation de ladite broche porte-outil, caractérisée par une tête de détection de contact (23) d'un diamètre prédéterminé, fixée sur ledit porte-outil (13) dans une position coaxiale par rapport à celui-ci, un moyen (3) connecté électriquement à ladite tête de détection de contact (23) pour détecter un contact entre ladite pièce à usiner (W) et ladite tête de détection de contact (23), et un moyen (4) de mesure du diamètre du perçage, connecté entre ledit moyen de détection de contact (3) et ledit moyen de commande de l'avance (5) pour appliquer audit moyen de commande de l'avance (5) des impulsions d'avance et des signaux de définition des axes, de manière à faire se déplacer ladite broche porte-outil (12) par rapport à ladite pièce à usiner (W) d'une première position à une seconde position, dans chacune desquelles ladite tête de détection de contact (23) vient au contact de ladite pièce à usiner (W), selon un trajet passant par le centre dudit perçage de la pièce à usiner, afin de mesurer ainsi le diamètre dudit perçage de la pièce à usiner, et ledit circuit de commande du moteur (6) étant sensible audit moyen de mesure (4), pour faire tourner ladite broche porte-outil (12) afin de régler le positionnement radial dudit alésoir.

2. Machine-outil telle que définie dans la revendication 1, dans laquelle ledit moyen de mesure (4) possède une function de calcul d'une différence entre un diamètre mesuré dudit perçage de la pièce à usiner et un diamètre final imposé, et ledit circuit de commande de moteur (6) entraîne en rotation ladite broche porte-outil (12) sur un nombre de tours correspondant à ladite différence.

3. Machine-outil telle que définie dans la revendication 1, dans laquelle ledit moyen de détection de contact comprend:

une résistance (R1);

une bobine (60) reliée à une alimentation en énergie électrique (59) en série avec ladite résistance (R1) et disposée autour d'une partie frontale de ladite tête de broche (10) afin de forcer le courant induit à circuler à travers ladite pièce à usiner (W), la tête de détection de contact (23), la broche porte-outil (12), la tête de broche (10), le corps de la machine et la table de travail, lorsque le contact s'établit entre ladite pièce à usiner (W) et ladite tête de détection de contact (23); et

un détecteur de tension (3) relié à ladite résistance (R1) et audit moyen de mesure (4) pour détecter la variation de tension aux bornes de ladite résistance lorsqu'un contact s'établit entre ladite pièce à usiner (W) et ladite tête de détection de contact (60).

4. Machine-outil telle que définie dans la revendication 1, 2 ou 3, dans laquelle ledit moyen de mesure (4) applique des impulsions d'avance et des signaux de définition des axes audit moyen de commande de l'avance (5), de façon à faire se déplacer ladite broche porte-outil (12) à une vitesse rapide sur une distance prédéterminée depuis le centre dudit perçage de la pièce à usiner en direction de ladite première position et, à une vitesse lente, jusqu'à ce que ladite broche porte-outil (12) ait atteint ladite première position, puis à faire se déplacer ladite broche porte-outil (12) à la vitesse rapide sur le double de ladite distance prédéterminée depuis ladite première position en direction de ladite seconde position, et à la vitesse lente jusqu'à ce que ladite broche porte-outil ait atteint ladite seconde position.

5. Machine-outil telle que définie dans la revendication 1, 2 ou 3, dans laquelle ledit porte-outil (13) comprend:

une tige (14) pouvant être insérée dans ladite broche porte-outil (12); et

un collier de montage d'outil (16) relié de manière fixe à ladite tige (14) et portant ledit alésoir (26), déplaçable, de façon réglable, dans une direction radiale dudit collier de montage (16), et dans laquelle lesdits moyens de réglage comprennent:

un arbre fileté (20) supporté à coulissement axial mais immobilisé en rotation dans ledit collier de montage d'outil (16) et comportant une surface de came (21) qui est inclinée le long de l'axe dudit collier de montage d'outil (16);

un moyen de transmission (22, 29) interposé entre ledit alésoir (26) de ladite surface de came (21) dudit arbre fileté (20) pour déplacer de façon réglable ledit alésoir (26) dans la direction radiale sous l'effet de coin de ladite surface de came (21) à la suite du déplacement axial dudit arbre fileté (20);

un élément rotatif (30) reçu à rotation et engagé par vissage sur ledit arbre fileté (20);

un élément d'engrenage interne en forme d'anneau (37) porté à rotation sur les surfaces périphériques externes de ladite tige (14) et dudit collier de montage (16), et adapté à être fixé par rapport à ladite tête de broche (12), pour établir une rotation relative entre ledit élément d'engrenage interne (37) et ledit collier de montage (16) lorsque ladite broche porte-outil (12) est mise en rotation; et

un moyen formant engrenage réducteur (17) pour transmettre audit élément rotatif (30) la rotation dudit collier de montage (16) par rapport audit élément d'engrenage interne (37) selon un rapport de réduction prédéterminé, ledit moyen formant engrenage réducteur (17) comprenant un engrenage planétaire rotatif (38) en prise avec ledit élément d'engrenage interne (37).

6. Machine-outil telle que définie dans la revendication 5, dans laquelle ledit moyen de transmission comprend:

une pièce coulissante (22) maintenue en contact avec ladite surface de came (21) dudit arbre fileté (20) et guidée de façon à être déplacée dans la direction radiale dudit collier de montage (16) lorsque ledit arbre fileté (20) est déplacé axialement; et

un goujon (29) guidé par ledit collier de montage d'outil (16) entre ladite pièce coulissante (22) et ledit alésoir (26) pour transmettre le déplacement radial de ladite pièce coulissante (22) audit alésoir.

7. Machine-outil telle que définie dans la revendication 5, comprenant en outre:

un moyen d'encliquetage (39, 40) disposé entre ledit élément d'engrenage interne (37) et l'un des deux éléments constitués par ladite tige (14) et le collier de montage (16) pour empêcher la rotation dudit élément d'engrenage interne (37) par rapport à ladite tige (14) pendant les opérations de coupe.

8. Machine-outil telle que définie dans la revendication 5, dans laquelle ledit élément rotatif (30) et ledit moyen formant engrenage réducteur (17) sont reçus dans un évidement ménagé dans la partie de contact entre ladite tige (14) et ledit collier de montage (16).

9. Machine-outil telle que définie dans la revendication 9, dans laquelle ledit moyen formant engrenage réducteur (17) comprend:

un engrenage stationnaire (31) fixé sur ledit collier de montage (16), en juxtaposition et co-axialement avec ladite élément rotatif (30);

un engrenage de transmission en forme d'anneau (33) entourant ledit élément rotatif (30) et ledit engrenage stationnaire (31) et placé en prise avec ledit engrenage planétaire (38), au niveau de sa surface périphérique externe; et

deux engrenages à pignons (35, 36) portés à rotation par ledit engrenage de transmission (33) et en prise avec ledit engrenage stationnaire (31) et une partie d'engrenage formée sur ledit élément rotatif (30).

**Patentansprüche**

1. Werkzeugmaschine mit einem Maschinenbett (1), einem auf dem Maschinenbett gelagerten Werkstückschlitten (51) zur Lagerung eines Werkstücks (W) mit einer zu bearbeitenden Bohrung, mit einem auf dem Maschinenbett gelagerten Spindelkopf (10), mit einer drehbar in dem Spindelkopf (10) gelagerten Werkzeugspindel (12), mit einem in Antriebsverbindung mit der Werkzeugspindel (12) stehenden Motor (58) zum Drehen der Werkzeugspindel (12) mit einem Servomotor (54, 55, 56) zur Bewirkung einer Relativbewegung zwischen dem Werkstückschlitten und der Werkzeugspindel (12), mit einer mit dem Motor (58) verbundenen Motorsteuerschaltung (6) zum Steuern des Motors, mit einer Vorschubsteuereinrichtung (5), welche mit dem Servomotor verbunden ist zur Steuerung des Servomotors gemäß Vorschubimpulse und Achsensignalen, mit einer Werkzeughalterung (13), welche von der Werkzeugspindel (12) aufnehmbar ist, mit einem Bohrwerkzeug (26), welches in der Werkzeughalterung (13) gehaltert ist, mit einer Einrichtung (20, 29) in der Werkzeughalterung zur Einstellung einer radialen Position des Bohrwerkzeugs (26) unter Ausnutzung der Rotation der Werkzeugspindel, gekennzeichnet durch einen Kontakterfassungskopf (23) mit einem vorbestimmten Durchmesser, welcher an der Werkzeughalterung (13) in koaxialer Beziehung zu dieser befestigt ist, eine Einrichtung (3), welche elektrisch mit dem Kontakterfassungskopf (23) verbunden ist zur Erfassung eines Kontaktes zwischen dem Werkstück (W) und dem Kontakterfassungskopf (23), durch eine Bohrungsdurchmesser-Meßeinrichtung (4), welche zwischen der Kontakterfassungseinrichtung (3) und der Vorschubsteuereinrichtung (5) liegt zur Beaufschlagung der Vorschubsteuereinrichtung (5) mit Vorschubimpulsen und Achsensignalen zur Bewegung der Werkzeugspindel (12) relativ zum Werkstück (W) von einer Position zu einer anderen Position, in deren jeder der Kontakterfassungskopf (23) das Werkstück (W) berührt und zwar entlang einem Bewegungspfad, welcher durch das Zentrum der Werkstückbohrung verläuft zum Zwecke der Messung des Durchmessers der Werkstückbohrung, wobei die Motorsteuerschaltung (6) auf die Meßeinrichtung (4) anspricht und die Werkzeugspindel (12) dreht zum Zwecke der Einstellung der radialen Position des Bohrwerkzeugs.

2. Werkzeugmaschine nach Anspruch 1 dadurch gekennzeichnet, daß die Meßeinrichtung (4) eine Differenz zwischen einem gemessenen Durchmesser der Werkstückbohrung und einem befohlenen Enddurchmesser berechnet und daß die Motorsteuereinrichtung (6) die Werkzeugspindel (12) in Umdrehungen versetzt, welche der Differenz entsprechen.

3. Werkzeugmaschine nach Anspruch 1 dadurch gekennzeichnet, daß die Kontakterfassungseinrichtung folgendes umfaßt:

einen Widerstand (R1);

eine Spule (60), welche mit einer elektrischen Stromversorgung (59) verbunden ist und zwar in Reihe mit dem Widerstand (R1) und welche um den vorderen Bereich des Spindelkopfes (10) angeordnet ist zur Bewirkung des Flusses eines induzierten Stromes durch das Werkstück (W), den Kontakterfassungskopf (23), die Werkzeugspindel (12), den Spindelkopf (10), das Maschinenbett und den Werkzeugschlitten sobald ein Kontakt besteht zwischen dem Werkstück (W) und dem Kontakterfassungskopf (23); und

einen Spannungsdetektor (3), welcher mit dem Widerstand (R1) verbunden ist, sowie mit der Meßeinrichtung (4) zur Erfassung der Änderung der Spannung über den Widerstand, wenn Kontakt hergestellt wird zwischen dem Werkstück (W) und dem Kontakterfassungskopf (60).

4. Werkzeugmaschine nach einem der Ansprüche 1, 2 oder 3, dadurch gekennzeichnet, daß die Meßeinrichtung (4) der Vorschubsteuereinrichtung (5) Vorschubimpulse und Achsensignale zuführt zur Bewegung der Werkzeugspindel (12) mit Eilgeschwindigkeit über einen vorbestimmten Abstand vom Zentrum der Werkstückbohrung in Richtung auf die erste Position und mit einer langsamen Geschwindigkeit bis die Werkzeugspindel (12) in diese erste Position bewegt ist gefolgt von einer Bewegung der Werkzeugspindel (12) mit Eilgeschwindigkeit über das zweifache des vorbestimmten Abstandes aus der ersten Position in Richtung auf die andere Position und mit einer langsamen Geschwindigkeit bis die Werkzeugspindel die andere Position erreicht.

5. Werkzeugmaschine nach einem der Ansprüche 1, 2 oder 3, dadurch gekennzeichnet, daß die Werkzeughalterung (13) folgendes umfaßt:

einen Schenkel (14), welcher in der Werkzeugspindel (12) aufnehmbar ist; und

eine Werkzeughalterungshülse (16), welche fest mit dem Schenkel (14) verbunden ist und das Bohrwerkzeug (26) trägt, welches in radialer Richtung zur Befestigungshülse (16) einstellbar beweglich ist und wobei die Einstelleinrichtung folgendes umfaßt:

eine Schraubenspindel (20), welche in der Werkzeughalterungshülse (16) axial verschiebbar aber nicht drehbar gelagert ist und eine Nockenfläche (21) aufweist, welche entlang der Achse der Werkzeughalterungshülse (16) abgeschrägt ist;

eine Übertragungseinrichtung (22, 29), welche zwischen dem Bohrwerkzeug (26) und der Nockenfläche (21) angeordnet ist zur einstellbaren Bewegung des Bohrwerkzeugs (26) in der radialen Richtung vermöge der Keilwirkung der Nockenfläche (21) bei axialer Bewegung der Schraubenspindel (20);

ein drehbares Bauteil (30), welches relativ zur Schraubenspindel (20) drehbar ist und diese in Schraubverbindung aufnimmt;

ein ringförmiges Innenzahnrad (37), welches drehbar auf den Außenperipherien des Schenkels (14) und der Halterungshülse (16) gelagert ist und relativ zum Spindelkopf (12) festlegbar ist zur Bewirkung einer Relativdrehung zwischen dem Innenzahnrad (37) und der Halterungshülse (16) bei Drehung der Werkzeugspindel (12); und

einem Untersetzungsgetriebe (17) zur Übertragung der Drehbewegung der Halterungshülse (16) relativ zum Innenzahnrad (37) auf das drehbare Bauteil (30) mit einem vorbestimmten Untersetzungsverhältnis, wobei das Untersetzungsgetriebe (17) ein drehbares Planetenzahnrad (38) umfaßt, welches mit dem Innenzahnrad (37) kämmt.

6. Werkzeugmaschine nach Anspruch 5, dadurch gekennzeichnet, daß die Übertragungseinrichtung folgendes umfaßt:

ein Gleitstück (22), welches in Kontakt mit der Nockenfläche (21), der · Schraubenspindel (20) steht und bei axialer Bewegung der Schraubenspindel (20) in der radialen Richtung der Halterungshülse (16) bewegbar geführt ist; und

einen Stift (29), welcher durch die Werkzeughalterungshülse (16) geführt ist und zwischen dem Gleitstück (22) und dem Bohrwerkzeug (26) angeordnet ist zur Übertragung der radialen Bewegung des Gleitstücks (22) auf das Bohrwerkzeug.

7. Werkzeugmaschine nach Anspruch 5, dadurch gekennzeichnet, daß sie folgendes umfaßt:

eine Verriegelungseinrichtung (39, 40) zwischen dem Innenzahnrad (37) und dem Schenkel (14) oder der Halterungshülse (16) zur Verhinderung einer Drehung des Innenzahnrads (37) relativ zum Schenkel (14) während der Werkzeugbearbeitung.

8. Werkzeugmaschine nach Anspruch 5, dadurch gekennzeichnet, daß das drehbare Bauteil (30) und das Untersetzungsgetriebe (17) in einer Ausnehmung untergebracht sind, welche sich im Kontaktbereich zwischen dem Schenkel (14) und der Halterungshülse (16) befindet.

9. Werkzeugmaschine nach Anspruch 9, dadurch gekennzeichnet, daß das Untersetzungsgetriebe (17) folgendes umfaßt:

ein stationäres Zahnrad (31), welches an der Befestigungshülse (16) befestigt ist und zwar koaxial zum drehbaren Bauteil (30) und in Nachbarschaft zu diesem;
ein ringförmiges Übertragungszahnrad (33), welches das drehbare Bauteil (30) und das stationäre Zahnrad (31) umgibt und an seiner Außenperipherie mit dem Planetenzahnrad (38) kämmt und
ein Paar Ritzel (35, 36), welche drehbar im Übertragungszahnrad (33) gelagert sind und mit dem stationären Zahnrad (31) und einer Verzahnung am drehbaren Bauteil (30) kämmen.

# FIG. 1

0 043 920

# FIG. 2

# FIG.3

FIG. 4